# FASCICULE DE BREVET EUROPEEN

(11) **EP 3 846 589 B1**
(45) Date de publication et mention de la délivrance du brevet: **24.07.2024**
(21) Numéro de dépôt: 20217025.4
(22) Date de dépôt: 23.12.2020
(51) Int. Cl.: H05B 6/12

(54) **TABLE DE CUISSON COMPRENANT DES INDUCTEURS A CONTOUR OVALE**
KOCHFELD, DAS INDUKTOREN MIT OVALEM UMRISS UMFASST
HOB COMPRISING OVAL-CONTOUR INDUCTION UNITS

(30) Priorité: 31.12.2019 FR 1915757
(43) Date de publication de la demande: 07.07.2021
(73) Titulaire: Groupe Brandt, 92500 Rueil-Malmaison (FR)
(72) Inventeur: ANDRE, Xavier, 45000 Oleans (FR); GOUMY, Cédric, 45130 Huisseau-sur-Mauves (FR); ROUX, Alain, 45160 Saint Hilaire Saint Mesmin (FR)
(74) Mandataire: Santarelli

(56) Documents cités:
- EP-A1- 1 858 300
- EP-A2- 2 440 011
- EP-A2- 2 670 211
- EP-A2- 2 775 783

## Description

La présente invention concerne une table de cuisson à induction. En particulier, elle concerne une table de cuisson ayant au moins une partie sans foyers prédéfinis.

D'une manière générale, les tables de cuisson à induction comportent une plaque de cuisson, le plus souvent rectangulaire, et plusieurs inducteurs répartis dans un plan de chauffe sous la plaque de cuisson. Chaque inducteur est généralement formé d'un enroulement, ou bobinage de fils conducteurs par exemple, à contour sensiblement circulaire.

On entend par table de cuisson ayant au moins une partie sans foyers prédéfinis des tables dans lesquelles les zones de chauffe dans ladite au moins une partie sont flexibles. Autrement dit, dans ladite au moins une partie, les zones de chauffe se créent au fur et à mesure que des récipients sont posés en fonction de la taille et de la position desdits récipients. Ces tables de cuisson sont dites tables matricielles lorsque toute la table est sans foyers prédéfinis, et tables mixtes lorsque seule une partie de la table est sans foyers prédéfinis.

Dans ladite au moins une partie sans foyers prédéfinis, les inducteurs peuvent être répartis selon une disposition bidimensionnelle dite régulière et dans laquelle les inducteurs sont répartis l'un à côté de l'autre de sorte à former des lignes et des colonnes d'inducteurs.

Ce type de disposition est par exemple divulgué dans le document EP 2 440 011. Cependant, comme cela est visible sur les figures de ce dernier, avec cette disposition d'inducteurs à contour circulaire un espace important n'est pas occupé par les inducteurs dans le plan de chauffe. En particulier, l'espace entre chaque groupe de quatre inducteurs est vide. Cela engendre donc une mauvaise répartition de chauffe dans le plan de chauffe.

EP 2 775 783 A2 (DELTA ELECTRONICS INC [TW]) 10 septembre 2014 (2014-09-10) divulgue une table de cuisson à induction comportant une plaque de cuisson rectangulaire, et plusieurs inducteurs identiques ayant chacun un centre, les inducteurs étant répartis selon une disposition bidimensionnelle dans un plan de chauffe s'étendant sous la plaque de cuisson.

La présente invention a pour but de résoudre au moins l'un des inconvénients précités.

L'invention concerne une table de cuisson à induction comportant une plaque de cuisson rectangulaire, et plusieurs inducteurs identiques ayant chacun un centre, les inducteurs étant répartis selon une disposition bidimensionnelle dans un plan de chauffe s'étendant sous la plaque de cuisson, les centres des inducteurs étant alignés en lignes et colonnes selon une première direction et une deuxième direction.

Selon l'invention, chaque inducteur est formé d'un enroulement de fils conducteurs à contour sensiblement ovale et possède un axe principal de symétrie, les axes principaux des inducteurs s'étendant selon des directions parallèles entre elles et obliques par rapport à la première direction et la deuxième direction.

Les inducteurs étant à contour ovale et inclinés par rapport à leurs directions d'alignement (première direction et deuxième direction), cela permet une meilleure optimisation de la surface occupée dans le plan de chauffe. En effet, les inducteurs ainsi constitués et disposés peuvent plus facilement être encastrés les uns avec les autres, dans le sens où au moins une partie d'un inducteur peut être disposée entre deux inducteurs sans pour autant que les inducteurs ne se recouvrent. La surface de chauffe est ainsi optimisée.

Par ailleurs, la disposition régulière des inducteurs selon la première direction et la deuxième direction simplifie la détection des récipients et la commande des inducteurs.

En outre, la forme ovale des contours des inducteurs, de par ses portions arrondies, est bien adaptée à l'utilisation avec des récipients dont le fond est circulaire.

Selon une caractéristique, les inducteurs comportent des premiers sous-ensembles d'inducteurs dont les centres sont alignés selon la première direction, les inducteurs étant répartis dans le plan de chauffe de sorte à ce qu'un rectangle circonscrit à tout premier sous-ensemble d'inducteurs chevauche un rectangle circonscrit à un premier sous-ensemble d'inducteurs adjacent.

Les inducteurs sont ainsi encastrés les uns avec les autres selon la première direction. Cette optimisation de l'espace occupée par les inducteurs dans le plan de chauffe est permise par l'inclinaison selon la direction oblique et la forme ovale des inducteurs.

Selon une caractéristique, les inducteurs comportent des deuxièmes sous-ensembles d'inducteurs dont les centres sont alignés selon la deuxième direction, les inducteurs étant répartis dans le plan de chauffe de sorte à ce qu'un rectangle circonscrit à tout deuxième sous-ensemble d'inducteurs chevauche un rectangle circonscrit à un deuxième sous-ensemble adjacent.

Les inducteurs sont ainsi en outre encastrés les uns avec les autres selon la deuxième direction. Cela permet encore plus une meilleure optimisation de l'espace occupé par les inducteurs dans le plan de chauffe.

Selon une caractéristique, chaque inducteur est formé d'un enroulement de fils conducteurs à contour elliptique.

La forme ou contour elliptique des inducteurs permet un très bon encastrement des inducteurs les uns avec les autres grâce à l'arrondi du contour. En outre, le contour elliptique par son arrondi permet de limiter les mutuelles inductances entre deux inducteurs adjacents.

Selon une caractéristique, chaque inducteur est formé d'un enroulement de fils conducteurs à contour oblong.

Le contour oblong des inducteurs permet de la même manière une bonne optimisation de l'espace occupé par les inducteurs dans le plan de chauffe.

Selon une caractéristique, le contour oblong est formé de portions rectilignes de directions parallèles entre elles, lesdites portions rectilignes étant reliées de part et d'autre par deux portions semi-circulaires, tout inducteur ayant une portion rectiligne en vis-à-vis d'un inducteur adjacent est disposé de façon ce que ladite portion rectiligne dudit inducteur est face à une portion semi-circulaire dudit inducteur adjacent.

Une telle disposition des inducteurs dans le plan de chauffe permet de limiter la mutuelle inductance pouvant être causée par la disposition en vis-à-vis de deux positions rectilignes respectives de deux inducteurs adjacents.

Selon une caractéristique, la longueur des portions rectilignes est inférieure ou égale au diamètre des portions semi-circulaires.

Selon une caractéristique, la longueur des portions rectilignes est sensiblement supérieure au diamètre des portions semi-circulaires.

Un tel dimensionnement des inducteurs permet de limiter la mutuelle inductance qui pourrait être engendrée par la disposition en vis-à-vis de deux portions rectilignes respectives de deux inducteurs adjacents.

Selon une caractéristique, chacune des première direction et deuxième direction est orthogonale à un côté de la plaque de cuisson.

L'espace occupée par les inducteurs dans le plan de chauffe en est d'autant plus optimisé.

Selon une caractéristique, ladite table de cuisson comporte une interface homme machine s'insérant dans le plan de chauffe.

L'interface homme-machine peut être adaptée à commander et contrôler les inducteurs, leur puissance de consigne, etc.

D'autres particularités et avantages de l'invention apparaîtront encore dans la description ci-après en référence aux dessins annexés, donnés à titre d'exemples non limitatifs :
- la figure 1 est une vue est une vue schématique de dessus illustrant une table de cuisson à induction conforme à un premier mode de réalisation de l'invention ;
- la figure 2 est une vue schématique de dessus illustrant une table de cuisson à induction conforme à un deuxième mode de réalisation de l'invention ;
- la figure 3a est une vue schématique de dessus illustrant une table de cuisson à induction conforme à un troisième mode de réalisation de l'invention ;
- la figure 3b est une vue schématique de dessus illustrant une table de cuisson à induction conforme à un quatrième mode de réalisation de l'invention ;
- la figure 4 une vue schématique de dessus illustrant la table de cuisson de la figure 1 à laquelle a été rajoutée une interface homme machine ; et
- la figure 5 une vue schématique de dessus illustrant une table de cuisson à induction conforme à un cinquième mode de réalisation de l'invention.

L'invention concerne une table de cuisson 1 à induction représentée schématiquement par les figures. La table de cuisson 1 comporte une plaque de cuisson non représentée ici et des moyens de chauffage constitués par un ensemble d'inducteurs 3. Les inducteurs 3 s'étendent dans un plan, dit plan de chauffe 2.

La plaque de cuisson est ici rectangulaire, ce qui constitue la forme la plus courante dans le domaine des tables de cuisson. En particulier, la plaque de cuisson comprend deux côtés longitudinaux et deux côtés latéraux. Par plaque de cuisson rectangulaire, on entend toute plaque dont les côtés forment un quadrilatère dont les angles sont droits. La plaque de cuisson peut être carrée par exemple.

Le plan de chauffe 2 s'étend en-dessous de la plaque de cuisson. Le plan de chauffe 2 peut être rectangulaire, par correspondance avec la plaque de cuisson située au-dessus. Le plan de chauffe 2 peut également présenter une autre forme polygonale, par exemple afin d'intégrer une interface Homme-Machine (IHM) ou d'autres éléments n'ayant pas de fonction de chauffage.

Dans ce document, on considère que les côtés longitudinaux de la plaque de cuisson correspondent respectivement à un bord avant et un bord arrière de ladite plaque de cuisson en position d'utilisation. On entend par bord avant le côté de la plaque de cuisson le plus proche d'un utilisateur situé face à elle pour son utilisation, et par bord arrière au côté de la plaque de cuisson le plus éloigné dudit utilisateur. Ainsi, les côtés longitudinaux de la plaque de cuisson s'étendent selon une direction longitudinale et que les côtés latéraux de la plaque de cuisson s'étendent selon une direction transversale.

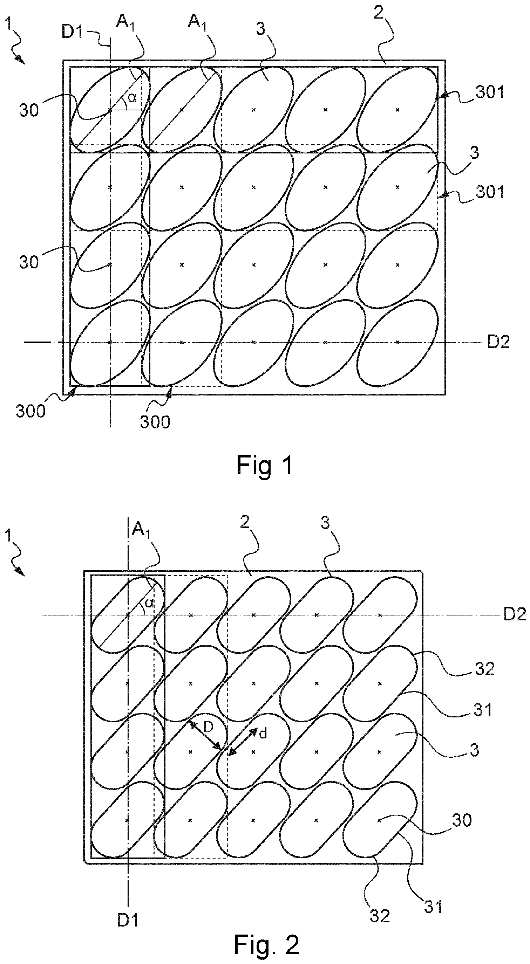

Les figures 1, 2, 3a, 3b, 4 représentent des modes de réalisation dans lesquels la table de cuisson 1 est une table matricielle, c'est-à-dire une table de cuisson n'ayant pas de foyers prédéfinis. On entend par foyers de chauffe prédéfinis, des foyers préalablement (à l'utilisation de la table de cuisson) délimités, chaque foyer prédéfini ayant des moyens de commande qui lui sont préalablement associés.

Plus précisément, une zone de chauffe est constituée au cas par cas en fonction de la position et de la taille d'un récipient placé sur la plaque de cuisson en vis-à-vis d'un sous-ensemble d'inducteurs 3. Des moyens de détection, formés généralement par les inducteurs eux-mêmes, détectent le récipient posé sur la plaque de cuisson et une zone de chauffe est créée au niveau du sous-ensemble d'inducteur au-dessus duquel est posé le récipient.

Chaque sous-ensemble d'inducteurs 3 formant zone de chauffe est ensuite commandé en fonction d'une puissance de consigne demandée par l'utilisateur pour la chauffe du récipient disposé au-dessus de la zone de chauffe.

Sur une telle table de cuisson à induction de type matricielle, le nombre, la position et la dimension des zones de chauffe ne sont ni délimitées ni définies sur la plaque de cuisson de ladite table de sorte à augmenter la souplesse d'utilisation de celle-ci.

Les inducteurs 3 sont répartis suivant une disposition bidimensionnelle dans le plan de chauffe de la table de cuisson 1. En particulier, les inducteurs 3 sont disposés de telle sorte que les centres 30 des inducteurs 3 sont alignés selon une première direction D1 et une deuxième direction D2 non parallèles entre elles. Autrement dit, les inducteurs 3 sont répartis de sorte à former des rangées d'inducteurs selon la première direction D1 et des rangées d'inducteurs selon la deuxième direction D2. Les exemples des figures 1, 2 3a, 3b illustrent cinq rangées d'inducteurs selon la première direction D1 et quatre rangées d'inducteurs selon la deuxième direction D2.

Les inducteurs 3 dont les centres 30 sont alignés selon la première direction D1 sont appelés ici premiers sous-ensembles d'inducteurs 300. Les premiers sous-ensembles d'inducteurs de la nième rangée sont appelés ici premiers sous-ensembles d'inducteurs 300(n), et les premiers sous-ensembles d'inducteurs adjacents sont appelés premiers sous-ensembles d'inducteurs 300(n+1).

Les inducteurs 3 dont les centres 30 sont alignés selon la deuxième direction D2 sont appelés ici deuxièmes sous-ensembles d'inducteurs 301. Les deuxièmes sous-ensembles d'inducteurs de la nième rangée sont appelés ici deuxièmes sous-ensembles d'inducteurs 301(n), et les deuxièmes sous-ensembles d'inducteurs adjacents sont appelés deuxièmes sous-ensembles d'inducteurs 301 (n+1).

Les premiers sous-ensembles d'inducteurs 300 et les deuxièmes sous-ensembles d'inducteurs 301 peuvent être constitués d'une rangée entière d'inducteurs ou d'une partie uniquement d'une rangée d'inducteurs. Les premiers sous-ensembles d'inducteurs 300 et les deuxièmes sous-ensembles d'inducteurs 301 peuvent être constitués d'un seul ou plusieurs inducteurs 3. Chaque premier sous-ensemble d'inducteurs 300 est adjacent à au moins un premier sous-ensemble d'inducteurs 300, dit premier sous-ensemble d'inducteurs 300 adjacent. Chaque deuxième sous-ensemble d'inducteurs 301 est adjacent à au moins un deuxième sous-ensemble d'inducteurs 301, dit deuxième sous-ensemble d'inducteurs 301 adjacent.

La première direction D1 correspond à une direction parallèle à la direction transversale de la plaque de cuisson, et la deuxième direction D2 correspond à une direction parallèle à la direction longitudinale. La première direction D1 et la deuxième direction D2 sont donc perpendiculaires l'une à l'autre. En outre, dans ces modes de réalisation, la première direction D1 et la deuxième direction D2 sont chacune respectivement orthogonale à un côté longitudinal et un côté latéral de la plaque de cuisson. En d'autres termes, les inducteurs 3 sont disposés en lignes selon la direction longitudinale et en colonnes selon la direction transversale.

Les inducteurs 3 sont tous identiques. Cela permet un étage de pilotage en puissance identique.

Chaque inducteur 3 est formé d'un enroulement de fils conducteurs. L'enroulement n'est pas représenté ici. Seul le contour de chaque inducteur 3 est représenté. Chaque inducteur 3 est ici à contour sensiblement ovale, c'est-à-dire que l'enroulement comprend un fil périphérique extérieur formant un ovale. Le contour ovale correspond à la forme périphérique des inducteurs, indépendamment de la forme du bobinage ou enroulement au centre de l'inducteur. On entend par contour ovale une courbe plane fermée comportant deux parties convexes et possédant deux axes de symétrie orthogonaux. Comme visible sur les figures, les dimensions des deux axes de symétrie sont différentes. Chaque inducteur 3 présente ainsi un contour ovale de forme allongée. Ci-après, la dimension selon l'axe de symétrie le plus long est appelée grand axe, et la dimension selon l'axe de symétrie le plus petit est appelée petit axe. Chaque inducteur 3 présente donc un grand axe et un petit axe de dimensions différentes.

Le ratio entre le grand axe et le petit axe de l'inducteur 3 à contour ovale est de toute valeur permettant une optimisation de la couverture du plan de chauffe 2 par les inducteurs 3. Par exemple, le ratio entre le grand axe et le petit axe de l'inducteur 3 à contour ovale peut être au moins égal à deux. Cela permet d'obtenir un inducteur 3 à contour ovale bien plus long que large et ainsi d'optimiser la surface occupée par les inducteurs dans le plan de chauffe. La forme ovale peut être une ellipse, comme cela est le cas dans les exemples représentés aux figures 1, 4 et 5. Comme visible sur les figures, on entend par ellipse une conique d'excentricité strictement comprise entre 0 et 1. Une conique est en géométrie euclidienne une courbe plane obtenue par l'intersection d'un plan avec un cône de révolution, non dégénéré à une droite ou un plan, lorsque ce plan traverse de part en part le cône. Ainsi, l'ellipse n'inclut pas ici le cas particulier du cercle qui correspond à une conique d'excentricité nulle.

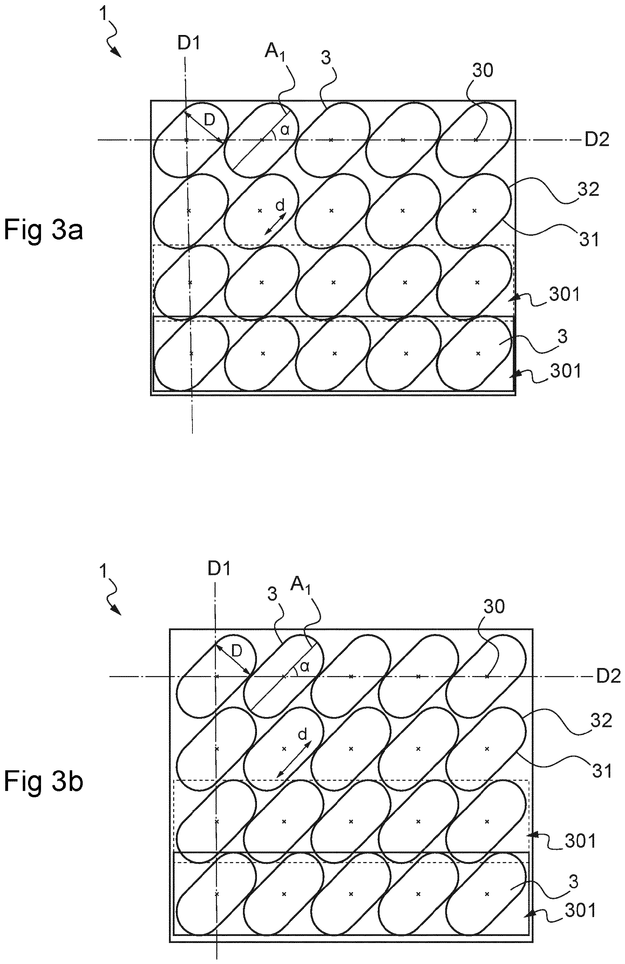

La forme ovale peut également être un oblong, comme cela est le cas dans les exemples représentés aux figures 2, 3a, 3b. On entend par oblong une courbe plane fermée comportant une portion centrale formée par deux cotés droits et parallèles, deux parties convexes de part et d'autre de la portion centrale, l'oblong possédant deux axes de symétrie orthogonaux entre eux.

Chaque inducteur 3 possède un axe principal A1 de symétrie. L'axe principal A1 de symétrie est le plus long des axes de symétrie de l'ovale. Ou autrement dit, l'axe principale A1 est le grand axe de l'ovale. Les axes principaux A1 des inducteurs 3 s'étendent selon des directions obliques parallèles entre elles. On entend par direction oblique une direction inclinée par rapport aux directions D1 et D2 d'alignement des centres des inducteurs. La direction oblique est ici une direction autre que la direction longitudinale et la direction transversale.

En particulier, la direction oblique de l'axe principal A1 de chaque inducteur 3 forme un angle non nul avec chacune de la première direction D1 et de la deuxième direction D2. La direction oblique de l'axe principal A1 forme notamment un premier angle α différent des angles nul, droit et plat, avec la deuxième direction D2. Le premier angle α peut être compris entre 15 et 76°, et de préférence compris entre 40 et 60°.

Les inducteurs 3 sont ici répartis dans le plan de chauffe de sorte qu'un rectangle circonscrit à tout premier sous-ensemble d'inducteurs chevauche ou recoupe un rectangle circonscrit d'un premier sous-ensemble d'inducteurs adjacent, et qu'un rectangle circonscrit à tout deuxième sous-ensemble d'inducteurs chevauche un rectangle circonscrit d'un deuxième sous-ensemble d'inducteurs adjacent. Autrement dit, un rectangle circonscrit à tout premier sous-ensemble d'inducteurs 300(n) chevauche ou recoupe un rectangle circonscrit d'un premier sous-ensemble d'inducteurs adjacent 300(n+1). Et un rectangle circonscrit à tout deuxième sous-ensemble d'inducteurs 301(n) chevauche un rectangle circonscrit d'un deuxième sous-ensemble d'inducteurs adjacent 301(n+1).

Des rectangles circonscrits sont représentés en traits pleins pour certains premiers et deuxièmes sous-ensembles d'inducteurs et en pointillés pour certains premiers et deuxièmes sous-ensembles d'inducteurs adjacents.

Comme cela apparait dans les figures, le terme circonscrit s'entend dans sa signification mathématique. On entend ainsi par rectangle circonscrit à un sous-ensemble d'inducteurs le rectangle entourant et tangent à tous les inducteurs dudit sous-ensemble. En d'autres termes, il s'agit du plus petit rectangle qui délimite ou entoure ledit sous-ensemble d'inducteurs.

Les inducteurs 3 sont ainsi encastrés les uns avec les autres, dans le sens où l'espace disponible entre deux inducteurs est quasiment entièrement occupé par un autre inducteur sans pour autant que les inducteurs ne se recouvrent. Dans cette exemple de réalisation, les inducteurs 3 sont encastrés les uns avec les autres selon les première et deuxième directions. Cette disposition particulière des inducteurs 3 dans le plan de chauffe est possible grâce à la forme ovale des inducteurs et à leur inclinaison suivant la direction oblique.

Dans un autre exemple de réalisation, les inducteurs 3 peuvent être encastrés les uns dans les autres uniquement selon une seule des directions parmi la première direction D1 et la deuxième direction D2.

Les inducteurs 3 à contour elliptique, représentés à titres d'exemples aux figures 1, 4 et 5, présentent l'avantage d'avoir un contour dépourvu de portions rectilignes. Cela permet de minimiser l'influence entre deux inducteurs adjacents. En effet, deux inducteurs adjacents ainsi constitués minimisent les effets d'annulation ou d'addition du champ magnétique. Cela simplifie donc le pilotage des inducteurs et n'impose pas de maitriser le déphasage entre les courants qui circulent dans deux inducteurs adjacents. L'homogénéité de chauffe dans le plan de chauffe est ainsi assurée.

Les inducteurs 3 peuvent ainsi être encastrés sans se soucier de la mutuelle inductance.

Le contour oblong, comme visible sur les modes de réalisation des figures 2, 3a, 3b, est formé de portions rectilignes 31 de directions parallèles entre elles et de portions semi-circulaires 32. Les portions rectilignes 31, ou partie centrale, sont reliées de part et d'autre par les portions semi-circulaires 32 ou parties convexes.

Les inducteurs 3 sont répartis dans le plan de chauffe 2 de telle sorte que les portions rectilignes 31 d'un inducteur 3 ne soient pas ou quasiment pas disposées face aux portions rectilignes 31 d'un inducteur 3 adjacent. Autrement dit, tout inducteur 3 ayant une portion rectiligne 31 en vis-à-vis d'un inducteur 3 adjacent est disposé de façon ce que ladite portion rectiligne 31 dudit inducteur 3 est face à une portion semi-circulaire 32 dudit inducteur 3 adjacent. Cela évite les mutuelles inductances entre les inducteurs adjacents.

Les inducteurs 3 à contour oblong peuvent être dimensionnés de sorte à permettre une optimisation de l'espace occupé par les inducteurs 3 dans le plan de chauffe 2 tout en évitant les mutuelles inductances.

Par exemple, la longueur d des portions rectilignes 31 est inférieure ou égale au diamètre D des portions semi-circulaires 32. Ce dimensionnement particulier est bien visible sur les figures 2 et 3a. La figure 2 représente un exemple de réalisation dans lequel la longueur d des portions rectilignes 31 est égale au diamètre D des portions semi-circulaires 32. La figure 3a représente un exemple de réalisation dans lequel la longueur d des portions rectilignes 31 est strictement inférieure au diamètre D des portions semi-circulaires 32.

Comme visible sur les figures 2 et 3a, tout inducteur 3 à contour oblong comprend au moins une portion rectiligne 31 en vis-à-vis avec deux inducteurs 3 adjacents. Grâce au dimensionnement susvisé, les trois inducteurs, à savoir ledit inducteur et ses deux inducteurs adjacents, sont disposés de sorte à ce que ladite au moins une portion rectiligne 31 dudit inducteur 3 est face à une partie d'une portion semi-circulaire 32 de chaque inducteur adjacent. Ainsi, ladite portion rectiligne 31 dudit inducteur 3 n'est pas face aux portions rectilignes des inducteurs adjacents. La mutuelle inducteur est ainsi minimisée.

De cette manière, les inducteurs 3 peuvent être encastrés tout en ayant pour chaque inducteur 3 les portions rectilignes 31 au plus face à deux portions semi-circulaires 32 respectives de deux inducteurs adjacents audit inducteur.

Dans un autre exemple illustré par la figure 3b, la longueur d peut aussi être sensiblement supérieure au diamètre D compte tenu de l'espace nécessaire entre les inducteurs pour assurer leur assemblage et l'isolement électrique. Seul une très petite partie des portions rectilignes d'un inducteur est dans ce cas face à une portion rectiligne d'un inducteur adjacent. Ceci n'est pas gênant dans la mesure où la mutuelle inductance est faible par rapport à l'inductance propre des inducteurs (de l'ordre de quelques pourcents).

On comprend des explications ci-avant et des figures qu'afin d'obtenir une optimisation maximale de l'espace occupé par les inducteurs 3 dans le plan de chauffe 2, une équation est résolue prenant en compte les paramètres suivants : le nombre d'inducteurs 3, la taille et la forme des inducteurs (y compris le ratio entre le grand axe et le petit axe), et l'inclinaison des inducteurs (i.e. le premier angle α), les dimensions et la forme du plan de chauffe 2. Cette équation prend également en compte la contrainte d'alignement des centres 30 des inducteurs 3 selon la première direction D1 et la deuxième direction D2.

La résolution d'une telle équation peut être faite numériquement ou géométriquement.

L'arrangement des inducteurs 3 à contour ovale tel que décrit précédemment permet d'optimiser tout particulièrement la surface occupée par les inducteurs 3 dans un plan de chauffe 2 de forme rectangulaire. En effet, cet arrangement des inducteurs 3 permet de couvrir le plan de chauffe 2 rectangulaire de façon précise et complète dans les deux directions D1 et D2 (transversale et longitudinale). Les inducteurs 3 sont avantageusement tangents ou adjacents aux bords de la plaque de cuisson. Ainsi, quelles que soient les dimensions du plan de chauffe 2, un nombre fini et entier d'inducteurs 3 permet de couvrir ledit plan de chauffe 2 tout en minimisant les espaces vides sans bobinage entre les inducteurs. Les tables de cuisson ayant généralement des plaques de cuisson rectangulaires, cet arrangement d'inducteurs permet de couvrir le plan de chauffe quasiment en totalité.

Comme visible sur les figures, hormis les inducteurs périphériques, chaque inducteur 3 est entouré de six inducteurs 3 ou est adjacent à six inducteurs 3. Plus avantageusement, chaque inducteur 3 hormis les inducteurs périphériques, est tangent à six inducteurs. Cette caractéristique permet également d'optimiser l'espace occupé par les inducteurs 3 dans le plan de chauffe 2. Cela est permis par l'arrangement particulier dans le plan de chauffe 2 tel que décrit précédemment, notamment l'inclinaison des directions des axes principaux A1 de symétrie des inducteurs 3 et l'encastrement des inducteurs les uns dans les autres.

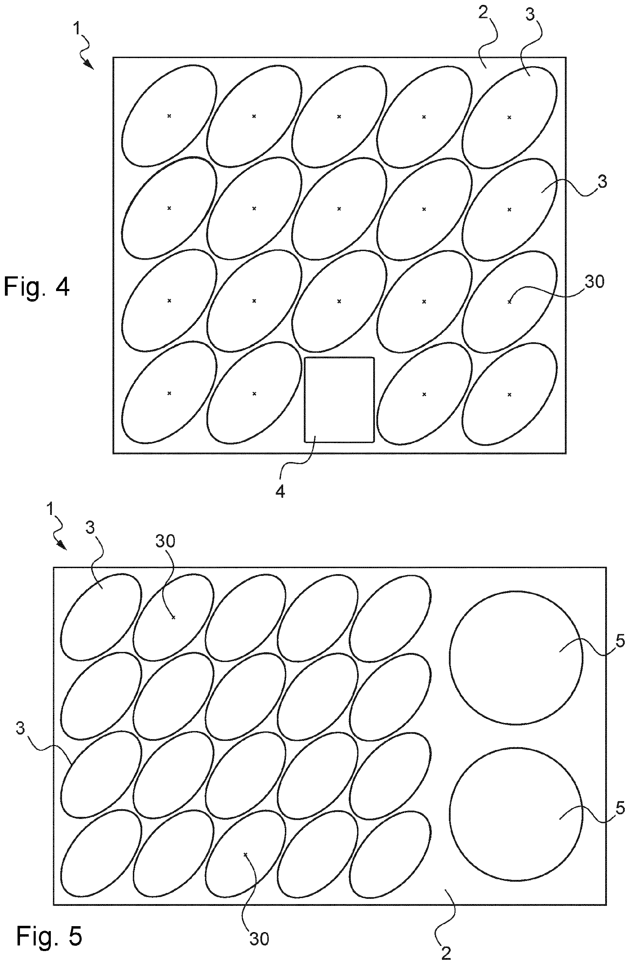

Dans les exemples de réalisation décrits en relation avec les figures 1, 2, 3a, 3b, le plan de chauffe 2 comprend uniquement des inducteurs 3. Bien entendu, il est envisageable de répartir les inducteurs 3 sur une partie du plan de chauffe 2 et de ménager un dégagement dans le plan de chauffe afin d'y insérer une interface homme-machine 4 comme cela est visible sur la figure 4. L'interface homme-machine 4 peut être de tout type permettant de contrôler et commander la table de cuisson 1 ou encore obtenir des informations en cours de son utilisation.

Par ailleurs, les figures 1, 2, 3a, 3b représentent toutes des tables matricielles. La table de cuisson 1 peut néanmoins être une table mixte, comportant d'une part une partie matricielle et d'autre part des zones de chauffe prédéfinies ou foyers prédéfinis 5, comme visible sur la figure 5.

Bien entendu, la présente invention n'est pas limitée aux modes de réalisation décrits et illustrés.

Les modèles de répartition des inducteurs représentés sont des modèles théoriques dans lesquels les inducteurs sont tangents de sorte à optimiser l'espace occupé dans le plan de chauffe 2. Un espace peut néanmoins être maintenu entre les inducteurs pour des raisons de montage et afin d'éviter les courts-circuits entre inducteurs. Cet espace peut être de l'ordre de 2 à 10 millimètres.

La présente invention propose ainsi une table de chauffe permettant une optimisation de l'espace occupé par les inducteurs dans le plan de chauffe et ainsi une optimisation de la surface de chauffe.

## Revendications

1. Table de cuisson à induction comportant une plaque de cuisson rectangulaire, et plusieurs inducteurs (3) identiques ayant chacun un centre (30), les inducteurs (3) étant répartis selon une disposition bidimensionnelle dans un plan de chauffe (2) s'étendant sous la plaque de cuisson, les centres (30) des inducteurs (3) étant alignés en lignes et colonnes selon une première direction (D1) et une deuxième direction (D2), **caractérisée en ce que** chaque inducteur (3) est formé d'un enroulement de fils conducteurs à contour sensiblement ovale et possède un axe principal (A1) de symétrie, les axes principaux (A1) des inducteurs (3) s'étendant selon des directions parallèles entre elles et obliques par rapport à ladite première direction (D1) et à ladite deuxième direction (D2).

2. Table de cuisson selon la revendication 1, dans laquelle les inducteurs (3) comportent des premiers sous-ensembles d'inducteurs (300) dont les centres (30) sont alignés selon la première direction (D1), les inducteurs (3) étant répartis dans le plan de chauffe (2) de sorte à ce qu'un rectangle circonscrit à tout premier sous-ensemble d'inducteurs (300) chevauche un rectangle circonscrit à un premier sous-ensemble d'inducteurs (300) adjacent.

3. Table de cuisson selon la revendication 2, dans laquelle les inducteurs comportent des deuxièmes sous-ensembles d'inducteurs (301) dont les centres (30) sont alignés selon la deuxième direction (D2), les inducteurs (3) étant répartis dans le plan de chauffe (2) de sorte à ce qu'un rectangle circonscrit à tout deuxième sous-ensemble d'inducteurs (301) chevauche un rectangle circonscrit à un deuxième sous-ensemble (301) adjacent.

4. Table de cuisson selon l'une des revendications 1 à 3, dans laquelle chaque inducteur (3) est formé d'un enroulement de fils conducteurs à contour elliptique.

5. Table de cuisson selon l'une des revendications 1 à 3, dans laquelle chaque inducteur (3) est formé d'un enroulement de fils conducteurs à contour oblong.

6. Table de cuisson selon la revendication 5, dans laquelle le contour oblong est formé de portions rectilignes (31) de directions parallèles entre elles, lesdites portions rectilignes (31) étant reliées de part et d'autre par deux portions semi-circulaires (32), tout inducteur (3) ayant une portion rectiligne (31) en vis-à-vis d'un inducteur (3) adjacent est disposé de façon ce que ladite portion rectiligne (31) dudit inducteur est face à une portion semi-circulaire (32) dudit inducteur (3) adjacent.

7. Table de cuisson selon l'une des revendications 1 à 6, dans laquelle chacune des première direction (D1) et deuxième direction (D2) est orthogonale à un côté de la plaque de cuisson

8. Table de cuisson selon l'une des revendications 1 à 7, dans laquelle ladite table de cuisson (1) comporte une interface homme-machine (4) s'insérant dans le plan de chauffe (2).

## Patentansprüche

1. Induktionskochfeld, eine rechteckige Kochplatte enthaltend und mehrere identische Induktoren (3), die jeweils ein Zentrum (30) aufweisen, wobei die Induktoren (3) gemäß einer zweidimensionalen Anordnung in einer Heizebene (2) verteilt sind, die sich unter der Kochplatte erstreckt, wobei die Zentren (30) der Induktoren (3) in Zeilen und Spalten in einer ersten Richtung (D1) und einer zweiten Richtung (D2) ausgerichtet sind, **dadurch gekennzeichnet, dass** jeder Induktor (3) aus einer Wicklung mit Leitungsdrähten mit einer im Wesentlichen ovalen Kontur gebildet ist, und eine symmetrische Hauptachse (A1) besitzt, wobei sich die Hauptachsen (A1) der Induktoren (3) parallel zueinander und schräg zur ersten Richtung (D1) und zur zweiten Richtung (D2) erstrecken.

2. Kochfeld nach Anspruch 1, wobei die Induktoren (3) erste Untermengen von Induktoren (300) enthalten, deren Zentren (30) in der ersten Richtung (D1) ausgerichtet sind, wobei die Induktoren (3) in der Heizebene (2) so verteilt sind, dass ein Rechteck, das jede erste Teilmenge von Induktoren (300) umgrenzt, ein Rechteck überlappt, das eine benachbarte erste Teilmenge von Induktoren (300) umgrenzt.

3. Kochfeld nach Anspruch 2, wobei die Induktoren zweite Untermengen von Induktoren (301) enthalten, deren Zentren (30) in der zweiten Richtung (D2) ausgerichtet sind, wobei die Induktoren (3) in der Heizebene (2) so verteilt sind, dass ein Rechteck, das die ganze zweite Teilmenge von Induktoren (301) umgrenzt, ein Rechteck überlappt, das eine benachbarte zweite Teilmenge (301) umgrenzt.

4. Kochfeld nach einem der Ansprüche 1 bis 3, wobei jeder Induktor (3) durch eine Wicklung mit Leitungsdrähten mit elliptischer Kontur gebildet ist.

5. Kochfeld nach einem der Ansprüche 1 bis 3, wobei jeder Induktor (3) durch eine Wicklung mit Leitungsdrähten mit länglicher Kontur gebildet ist.

6. Kochfeld nach Anspruch 5, wobei die längliche Kontur von geraden Bereichen (31) mit zueinander parallelen Richtungen ausgebildet ist, wobei die geraden Bereiche (31) auf beiden Seiten durch zwei halbkreisförmige Bereiche (32) verbunden sind, wobei jeder Induktor (3), der einen geraden Bereich (31) gegenüber einem benachbarten Induktor (3) aufweist, so angeordnet ist, dass der gerade Bereich (31) des Induktors einem halbkreisförmigen Bereich (32) des benachbarten Induktors (3) zugewandt ist.

7. Kochfeld nach einem der Ansprüche 1 bis 6, wobei jede der ersten Richtung (D1) und der zweiten Richtung (D2) orthogonal zu einer Seite der Kochplatte ist.

8. Kochfeld nach einem der Ansprüche 1 bis 7, wobei das Kochfeld (1) eine Mensch-Maschine-Schnittstelle (4) enthält, die in die Heizebene (2) eingeführt wird.

## Claims

1. An induction cooking table including a rectangular hob, and several identical inductors (3) each having a centre (30), the inductors (3) being distributed according to a two-dimensional arrangement in a heating plane (2) extending below the hob, the centres (30) of the inductors (3) being aligned in rows and columns according to a first direction (D1) and a second direction (D2), **characterised in that** each inductor (3) is formed of a winding of substantially oval-contoured conductive wires and has a main axis (A1) of symmetry, the main axes (A1) of the inductors (3) extending according to directions parallel to one another and oblique with respect to said first direction (D1) and to said second direction (D2).

2. The cooking table according to claim 1, wherein the inductors (3) include first subsets of inductors (300) whose centres (30) are aligned according to the first direction (D1), the inductors (3) being distributed in the heating plane (2) so that a rectangle circumscribing any first subset of inductors (300) overlaps an adjacent rectangle circumscribing a first subset of inductors (300).

3. The cooking table according to claim 2, wherein the inductors include second subsets of inductors (301) whose centres (30) are aligned according to the second direction (D2), the inductors (3) being distributed in the heating plane (2) so that a rectangle circumscribing any second subset of inductors (301) overlaps an adjacent rectangle circumscribing a second subset (301).

4. The cooking table according to one of claims 1 to 3, wherein each inductor (3) is formed of a winding of elliptically-contoured conductive wires.

5. The cooking table according to one of claims 1 to 3, wherein each inductor (3) is formed of a winding of oblong-contoured conductive wires.

6. The cooking table according to claim 5, wherein the oblong contour is formed of rectilinear portions (31) with directions parallel to one another, said rectilinear portions (31) being connected on either side by two semi-circular portions (32), any inductor (3) having a rectilinear portion (31) opposite an adjacent inductor (3) is arranged so that said rectilinear portion (31) of said inductor faces a semi-circular portion (32) of said adjacent inductor (3).

7. The cooking table according to one of claims 1 to 6, wherein each of the first direction (D1) and second direction (D2) is orthogonal to one side of the hob.

8. The cooking table according to one of claims 1 to 7, wherein said hob (1) includes a human-machine interface (4) fitting into the heating plane (2).
